# EUROPEAN PATENT APPLICATION

(11) **EP 4 844 660 A1**
(43) Date of publication of application: **25.11.2026**
(21) Application number: 26163841.5
(22) Date of filing: 11.03.2026
(51) Int. Cl.: G06Q 10/30, G06Q 30/0283

(54) **SETTING DEVICE**

(30) Priority: 19.05.2025 JP 2025083374
(71) Applicant: Toyota Jidosha Kabushiki Kaisha, Toyota-shi, Aichi-ken 471-8571 (JP)
(72) Inventor: KOBAYASHI, Ayano, Toyota-shi, 471-8571 (JP)
(74) Representative: D Young & Co LLP

(57) **Abstract**

The management server executes processing including: a step of acquiring information regarding a received battery pack from a primary-use server; a step of acquiring the degree of degradation of the battery pack; a step of setting the rarity of the battery pack; a step of setting the probability that the battery pack becomes unusable; a step of setting a usage fee; and a step of updating product information, inventory information, and the usage fee.

## Description

### BACKGROUND OF THE INVENTION

### 1. Field of the Invention

The present disclosure relates to setting devices.

### 2. Description of Related Art

Japanese Unexamined Patent Application Publication No. 2020-087635 (JP 2020-087635 A) discloses a technique in which battery information including either or both of degradation information of a specific battery or related information related to the degradation information are acquired from a server, and an authentication mark that enables acquisition of the battery information is output.

### SUMMARY OF THE INVENTION

After an energy storage device in a new condition is mounted on a vehicle and used in primary use, the energy storage device may, in some cases, be distributed on the market for secondary use as a used energy storage battery. As parameters indicating the condition of a used energy storage device, there are various parameters other than degradation over time. Therefore, it is desired that a fee for secondary use of the energy storage device be appropriately set in consideration of these parameters.

The present disclosure has been made to address the above issue, and an object thereof is to provide a setting device that appropriately sets a fee for secondary use of an energy storage device.

A setting device according to one aspect of the present disclosure is configured to acquire history information indicating a usage history of an energy storage device used by a primary user, and set, before a secondary user uses the energy storage device, a fee for the secondary user to use the energy storage device, by using the history information and external information of the energy storage device.

With this configuration, by setting the fee using the external information in addition to the history information, it is possible to appropriately set a fee for use by the secondary user.

In one embodiment, the external information includes information regarding rarity of materials constituting the energy storage device.

With this configuration, by setting the fee using the information regarding the rarity of materials constituting the energy storage device in addition to the history information, it is possible to appropriately set a fee for use by the secondary user.

In one embodiment, the history information includes information regarding degradation of the energy storage device and information regarding a probability that the energy storage device becomes unusable.

With this configuration, by using the information regarding the probability that the energy storage device becomes unusable, it is possible to more appropriately set a fee for use by the secondary user.

The present disclosure provides a setting device that appropriately sets a fee for secondary use of an energy storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of the configuration of an information management system including a management server;
FIG. 2 is a flowchart showing an example of processing executed by the management server; and
FIG. 3 is a diagram showing, in a table format, an example of various parameters associated with a battery ID of a battery pack.

### DETAILED DESCRIPTION OF EMBODIMENTS

An embodiment of the present disclosure will be described in detail below with reference to the drawings. The same or corresponding portions are denoted by the same signs throughout the drawings, and description thereof will not be repeated.

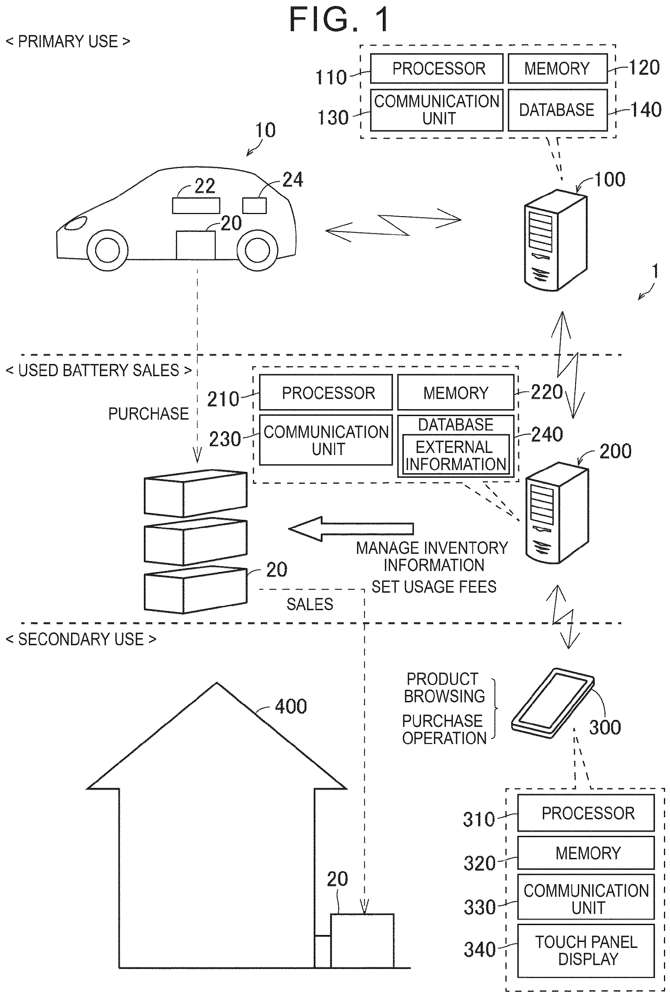

Hereinafter, the configuration of a management server 200, which is a setting device according to the present embodiment, will be described. FIG. 1 is a diagram illustrating an example of the configuration of an information management system 1 including the management server 200. As shown in FIG. 1, the information management system 1 includes a vehicle 10, a primary-use server 100, and the management server 200.

The vehicle 10 is not particularly limited as long as it is an electrified vehicle equipped with a battery pack 20 described later, and may be, for example, a battery electric vehicle, a hybrid electric vehicle, or a plug-in hybrid electric vehicle. The vehicle 10 includes the battery pack 20, an electronic control unit (ECU) 22 serving as a control device, and a communication device 24. The vehicle 10 is provided with a drive source (for example, a motor generator (MG)) (not shown) that is driven using electric power from the battery pack 20.

The battery pack 20 includes, for example, an assembled battery configured by arranging a plurality of cells along a predetermined direction. The cells include, for example, secondary cells such as lithium-ion cells or nickel metal hydride cells having a liquid electrolyte or a solid electrolyte.

The ECU 22 is connected to a voltage sensor that acquires the voltage of the battery pack 20, a current sensor that acquires a current flowing through the battery pack 20, and a temperature sensor that acquires the temperature of the battery pack 20 (none of which are shown). The voltage sensor, the current sensor, and the temperature sensor are all provided inside the battery pack 20. The ECU 22 includes a central processing unit (CPU) and a memory (neither of which is shown). Based on signals received from the sensors and information such as maps and programs stored in the memory, the ECU 22 controls various devices such that the vehicle 10 attains a desired state. The ECU 22 is configured to communicate with the primary-use server 100 via the communication device 24.

The ECU 22 has a function of sequentially calculating the state of charge (SOC) of the battery pack 20 based on detection values of the voltage sensor, the current sensor, and the temperature sensor. As a method for calculating the SOC, various known methods may be employed, such as a method based on current integration (coulomb counting) or a method based on estimation of open-circuit voltage (OCV). The ECU 22 also calculates the degree of degradation of the battery pack 20 based on the history of detection values of the voltage sensor, the current sensor, and the temperature sensor. In the present embodiment, the ECU 22 calculates, for example, the capacity retention ratio of the battery pack 20 as the "degree of degradation." The capacity retention ratio is calculated as the ratio between an initial full-charge capacity and a current full-charge capacity. The full-charge capacity may be calculated, for example, using an integrated amount of current when the SOC changes from a first value to a second value.

The primary-use server 100 communicates with the vehicle 10 to acquire information regarding the battery pack 20. A usage mode in which a new battery pack 20 is first used as a power source is referred to as "primary use." In the present embodiment, "primary use" refers to a usage mode in which a new battery pack 20 is used as a power source for the vehicle 10.

The primary-use server 100 includes, for example, a server managed by a manufacturer that manufactures the vehicle 10. The primary-use server 100 is configured to communicate with the management server 200 managed by a used-battery sales operator.

The primary-use server 100 includes a processor 110, a memory 120, a communication unit 130, and a database 140.

The processor 110 is, for example, a microprocessor such as a CPU or a micro-processor unit (MPU). The memory 120 is a volatile memory such as random access memory (RAM). The processor 110 executes various control processes by loading a system program and control programs read from a storage (not shown) of the primary-use server 100 into the memory 120 and executing them. The various control processes include communication processing using the communication unit 130 described later.

The communication unit 130 includes a communication interface with a network such as the Internet. The communication unit 130 is configured to bidirectionally communicate with the vehicle 10 in addition to communicating with the Internet. Although FIG. 1 illustrates an example in which the communication unit 130 can communicate with the vehicle 10, the communication unit 130 is configured to communicate with a plurality of vehicles including the vehicle 10. The communication unit 130 is also configured to bidirectionally communicate with a communication unit 230 of the management server 200.

The database 140 manages various data handled in the information management system 1. In the database 140, for example, user identification information (user IDs) for identifying users of a plurality of vehicles including the vehicle 10, vehicle identification information for identifying the vehicles including the vehicle 10, battery identification information for identifying battery packs mounted on the vehicles, terminal identification information for identifying terminals used by users, and information regarding the battery packs are registered in association with each other. For example, each time a predetermined period elapses, the primary-use server 100 acquires information regarding battery packs from a plurality of vehicles including the vehicle 10 and updates information registered in the database 140. Alternatively, each time any of the vehicles is brought to a dealer or the like, the primary-use server 100 acquires information regarding the battery pack from this vehicle, and updates information corresponding to this vehicle among the information registered in the database 140.

The management server 200 is a server managed by a used-battery sales operator. The management server 200 functions as a web server that displays product information and inventory information of used batteries on a website or the like. The management server 200 displays prices in addition to product information and inventory information of used batteries being sold on the website or the like.

For example, the management server 200 acquires information regarding the battery pack 20 from the primary-use server 100. By using the information regarding the battery pack 20, the management server 200 sets a selling price when selling the battery pack 20 as a used battery, or sets lease fees or rental fees to be paid on a monthly basis or according to a usage period when leasing or renting the battery pack 20. In the following description, selling prices, lease fees, and rental fees may be collectively referred to as a "usage fee" for using the battery pack 20. The management server 200 displays the set usage fee together with product information and inventory information on the website or the like. For example, each time a battery pack after primary use is received, the management server 200 adds product information, inventory information, and the usage fee of the received battery pack to a sales list posted on the website or the like.

The management server 200 includes a processor 210, a memory 220, the communication unit 230, and a database 240.

The processor 210, the memory 220, the communication unit 230, and the database 240 have configurations similar to those of the processor 110, the memory 120, the communication unit 130, and the database 140 of the primary-use server 100, except for points described below. Accordingly, detailed description thereof will not be repeated.

The communication unit 230 is configured to bidirectionally communicate with the primary-use server 100 in addition to communicating with the Internet. The communication unit 230 is also configured to bidirectionally communicate with a terminal 300 that will be described later.

The database 240 stores product information, inventory information, and usage fees of each battery pack. In the database 240, battery IDs for identifying battery packs managed as inventory and information regarding the battery packs managed as inventory are stored in association with each other, and identification information for identifying users who have completed in advance a registration process for use of the website is also stored. Information regarding a battery pack includes, for example, information regarding the capacity of the battery pack, information regarding the current SOC of the battery pack, and information regarding the degree of degradation of the battery pack. For example, the management server 200 updates the usage fee using inventory information each time a predetermined period elapses, or at each interval in which, among information regarding battery packs, information that changes over time changes by at least a predetermined amount. The management server 200 updates the sales list of used batteries displayed on the website using the updated information.

For example, the terminal 300 is configured to allow browsing of products on a website or the like managed by the management server 200. The terminal 300 is also configured to allow a user to select a battery pack that the user desires to use from a sales list displayed on the website or the like. The terminal 300 is also configured to enable procedures and settlement for receiving provision of the selected battery pack.

The terminal 300 includes a processor 310, a memory 320, a communication unit 330, and a touch panel display 340. The processor 310, the memory 320, and the communication unit 330 have the same configurations as those of the processor 110, the memory 120, and the communication unit 130 described above. Accordingly, detailed description thereof will not be repeated.

The touch panel display 340 includes a display unit configured by a liquid crystal display (LCD), an organic electroluminescence (EL), or the like, and an input unit configured by a touch panel or the like (neither of which is shown).

When a predetermined operation is performed by a user on the touch panel display 340, the user is able to browse products, perform selection operations, and the like. A used battery pack selected by the user may be provided by the used-battery sales operator and used as one of power supply sources for electric equipment installed in a house 400 shown in FIG. 1. It is possible to purchase a used battery pack on a website operated by the management server 200. In the present embodiment, a usage mode in which a battery pack after primary use is used for a purpose other than being mounted on the vehicle 10 is referred to as "secondary use." In the present embodiment, "secondary use" refers to a usage mode in which a used battery pack 20 is used as a power source for the house 400.

As described above, when the battery pack 20 is distributed on the market from a primary user (the user of the vehicle 10) to a secondary user (the user of the house 400), not all information regarding how much the battery pack 20 has degraded and how much remaining life it has is provided to the secondary user. Therefore, since it is not easy for the secondary user to predict changes in the condition of the battery pack 20, it is difficult for the secondary user to identify the extent of restrictions required for its use. In addition, for the primary user, there is a possibility that the resale value may be reduced even if the battery pack 20 is in a relatively good condition.

Therefore, in the present embodiment, the management server 200 acquires history information indicating a usage history of a battery pack used by a primary user, and sets, before a secondary user uses the battery pack, a fee for the secondary user to use the battery pack by using the history information and external information of the battery pack.

In this manner, by setting the fee using history information indicating a usage history of the battery pack and external information different from the history information, it is possible to appropriately set a fee for use by the secondary user.

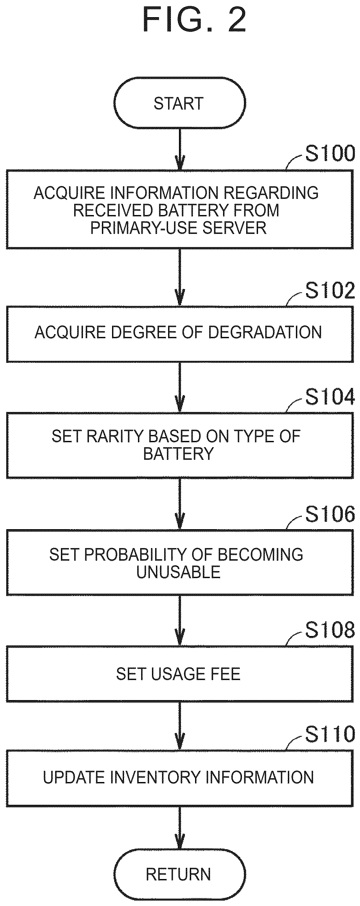

Hereinafter, an example of processing executed by the management server 200 will be described with reference to FIG. 2. FIG. 2 is a flowchart showing an example of processing executed by the management server 200. The management server 200 executes the processing shown in FIG. 2, for example, each time a predetermined time elapses or each time a used battery is received from a primary user.

In step (hereinafter, step will be referred to as "S") 100, the management server 200 acquires information regarding a received battery pack from the primary-use server 100. The information regarding the battery pack includes history information such as voltage, current, temperature, or SOC. The management server 200 acquires battery identification information of the battery pack using, for example, identification information assigned to the received battery pack. The management server 200 may identify the primary-use server 100 using the acquired battery identification information, and may request information regarding the received battery pack from the identified primary-use server 100. The identification information assigned to the battery pack may be battery identification information that can be identified from an image (for example, a barcode, a two-dimensional code, or character information) printed on a label attached to the battery pack, or may be battery identification information that can be read from a memory incorporated in the battery pack. The management server 200 associates the acquired information regarding the battery pack with a battery ID assigned to the received battery pack. The battery ID is information for identifying the battery pack in the management server 200. The processing then proceeds to S102.

In S102, the management server 200 acquires the degree of degradation of the battery pack. For example, the management server 200 may acquire the degree of degradation of the battery pack from the primary-use server 100, or may calculate the degree of degradation of the battery pack using the acquired history information. The management server 200 stores the calculated degree of degradation in association with the battery ID of the received battery pack. The processing then proceeds to S104.

In S104, the management server 200 sets the rarity of the battery pack. The "rarity" is, for example, a parameter expressed as a numerical value. For example, a larger numerical value is set as the rarity increases, and a smaller numerical value is set as the rarity decreases. The management server 200 sets a rarity value using, for example, information such as the type, model, serial number, manufacturing date, and manufacturing country of the received battery pack, and external information for determining whether a battery pack identified by such information uses materials having high rarity. When it is determined that materials having high rarity are used in the battery pack, the management server 200 sets a rarity value according to the type of material used. The relationship between material types and rarity values is determined in advance and stored in the database 240 of the management server 200. Examples of materials having high rarity include materials containing at least one rare metal such as lithium, cobalt, nickel, or graphite. When a plurality of types of materials having high rarity is used, the management server 200 may set a higher rarity value. The management server 200 may set the rarity value higher as the amount of materials having high rarity used increases. For example, the management server 200 may set a plurality of threshold levels for the amount of materials having high rarity used, and may increase or decrease a rarity value in accordance with the level identified by the set thresholds. The rarity may be, for example, a market price. Each time a predetermined period elapses, the management server 200 acquires latest information regarding the external information via the Internet and updates the external information. The management server 200 stores the set rarity value in association with the battery ID. The processing then proceeds to S106.

In S106, the management server 200 sets the probability that the received battery pack becomes unusable. Depending on the usage environment or usage conditions, the battery pack may suddenly become unusable, in addition to gradually becoming unusable due to degradation over time. The probability that the battery pack becomes unusable may be set such that the probability becomes higher as the number of conditions satisfied among a plurality of predetermined conditions increases, and becomes lower as the number of conditions satisfied decreases. The predetermined conditions may include, for example, a condition that the battery pack has been used in a high-temperature environment in which an ambient temperature exceeds a threshold, a condition that the battery pack has been used in a high-load environment in which a charging current or a discharging current exceeds a threshold, and a condition that a state in which current flows continues for at least a predetermined time. The management server 200 stores the set probability that the battery pack becomes unusable in association with the battery ID.

In S108, the management server 200 sets a usage fee. The management server 200 sets the usage fee using, for example, various parameters associated with the battery ID stored in the database 240.

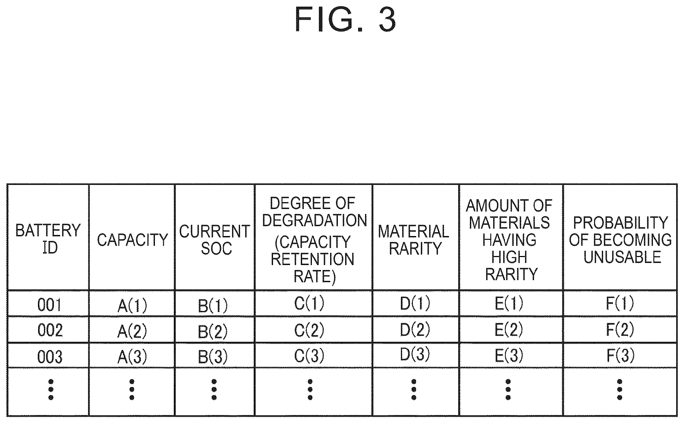

FIG. 3 is a diagram showing, in a table format, an example of various parameters associated with a battery ID of a battery pack. Battery IDs "001," "002," and "003" are shown in FIG. 3. Each of these battery IDs is associated with a capacity, a current SOC, a degree of degradation, a material rarity, an amount of materials having high rarity used, and a probability that the battery pack becomes unusable. As shown in FIG. 3, a capacity "A(1)," a current SOC "B(1)," a degree of degradation "C(1)," a material rarity "D(1)," an amount of materials having high rarity used "E(1)," and a probability that the battery pack becomes unusable "F(1)" are associated with battery ID "001."

Similarly, a capacity "A(2)," a current SOC "B(2)," a degree of degradation "C(2)," a material rarity "D(2)," an amount of materials having high rarity used "E(2)," and a probability that the battery pack becomes unusable "F(2)" are associated with battery ID "002." A capacity "A(3)," a current SOC "B(3)," a degree of degradation "C(3)," a material rarity "D(3)," an amount of materials having high rarity used "E(3)," and a probability that the battery pack becomes unusable "F(3)" are associated with battery ID "003."

The management server 200 sets a usage fee using the various parameters shown in FIG. 3. For example, for a battery pack having battery ID "001," the management server 200 may calculate coefficients corresponding to the various parameters with respect to a reference fee corresponding to the capacity "A(1)," and may set the usage fee by multiplying the reference fee by the calculated coefficients. Alternatively, the management server 200 may calculate additional fees and discount fees corresponding to the various parameters with respect to the reference fee, and may set the usage fee by adding the calculated additional fees to the reference fee and subtracting the calculated discount fees from the resulting sum. The management server 200 may set usage fees for battery packs corresponding to all battery IDs, or may set usage fees for battery packs corresponding to battery IDs for which parameters have been updated. The processing then proceeds to S110.

In S110, the management server 200 updates the product information, the inventory information, and the usage fee. For example, the management server 200 updates display of product information, inventory information, and usage fees of used battery packs included in a sales list displayed on the website or the like. The processing then ends.

The operation of the management server 200, which is the setting device according to the present embodiment, will be described based on the configuration and the flowchart described above.

For example, when the battery pack 20 mounted on the vehicle 10 is received as a used battery pack at a store or the like of a used-battery sales operator, battery identification information is acquired using identification information assigned to the received battery pack, and the primary-use server 100 is identified using the acquired battery identification information. The management server 200 acquires history information of the battery pack 20 corresponding to the battery identification information from the primary-use server 100 and stores the history information in the database 240 (S100). At this time, the management server 200 acquires, from the primary-use server 100, information regarding the capacity, the current SOC, the degree of degradation, and the battery model number of the battery pack 20, and the probability that the battery pack 20 becomes unusable. The management server 200 then sets the rarity of the battery pack 20 (S104). At this time, the management server 200 sets a numerical value indicating the rarity of the battery pack 20 using information regarding the battery pack 20 and external information. The management server 200 also sets the probability that the battery pack 20 becomes unusable (S106). The management server 200 sets a usage fee using the battery ID and the various parameters that have been set as shown in FIG. 3 (S108). Since the method for setting the usage fee is as described above, detailed description thereof will not be repeated. The management server 200 updates the product information, inventory information, and usage fee of the battery pack 20 (S110). The management server 200 adds information regarding the received battery pack 20 to a used battery sales list posted on the website or the like.

As described above, the management server 200, which is the setting device according to the present embodiment, sets the usage fee using history information indicating a usage history of a battery pack used by a primary user and external information different from the history information. Therefore, it is possible to appropriately set a fee when the battery pack is used by a secondary user. Accordingly, it is possible to provide a setting device that appropriately sets a fee for using an energy storage device for secondary use.

The external information for setting the usage fee includes information regarding a rarity of materials constituting the battery pack before use by a secondary user. Accordingly, by setting the usage fee using the history information and the information regarding the rarity of the battery pack, it is possible to appropriately set a fee when the battery pack is used by the secondary user.

The history information includes information regarding degradation of the battery pack and information regarding the probability that the battery pack becomes unusable. Accordingly, by using the information regarding the probability that the battery pack suddenly becomes unusable, it is possible to more appropriately set a fee when the battery pack is used by the secondary user.

Next, modifications will be described.
The above embodiment illustrates an example in which a secondary user uses a battery pack as a stationary power source. However, the usage purpose of the secondary user is not limited to a stationary power source, and the battery pack may be used as a power source for an electrified vehicle.

The above embodiment illustrates an example in which a primary user uses a battery pack as a power source for an electrified vehicle. However, the usage purpose of the primary user is not limited to a power source for an electrified vehicle, and the battery pack may be used as a stationary power source.

All or part of the modifications described above may be combined as appropriate.
The embodiment disclosed herein should be considered to be illustrative in all respects and not restrictive. The scope of the present invention is set forth in the claims rather than in the above description, and is intended to include all modifications within the meaning and scope equivalent to the claims.

## Claims

1. A setting device configured to
acquire history information indicating a usage history of an energy storage device used by a primary user, and
set, before a secondary user uses the energy storage device, a fee for the secondary user to use the energy storage device, by using the history information and external information of the energy storage device.

2. The setting device according to claim 1, wherein the external information includes information regarding rarity of materials constituting the energy storage device.

3. The setting device according to claim 1, wherein the history information includes information regarding degradation of the energy storage device and information regarding a probability that the energy storage device becomes unusable.
